# EUROPEAN PATENT APPLICATION

(11) **EP 4 804 591 A1**
(43) Date of publication of application: **09.09.2026**
(21) Application number: 23957301.7
(22) Date of filing: 02.11.2023
(51) Int. Cl.: H04W 24/02

(54) **INFORMATION PROCESSING METHOD, TERMINAL, NETWORK DEVICE, COMMUNICATION SYSTEM, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/129466
(87) International publication number: WO 2025/091433

(57) **Abstract**

Embodiments of the present invention provide an information processing method, a terminal, a network device, a communication system, and a storage medium. The information processing method comprises: determining a TCI state of a CSI-RS, wherein the TCI state is one of N indicated TCI states, and N is a positive integer. Therefore, in the embodiments of the present invention, when there are multiple indicated TCI states, it can be determined which indicated TCI state is used by the CSI-RS, i.e., it can be determined that a beam indicated by which indicated TCI state is used for performing CSI-RS transmission, thereby improving the wireless communication quality.

## Description

### TECHNICAL FIELD

The present disclosure relates to the field of communication technology, in particular, to an information processing method, a terminal, a network device, a communication system, and a storage medium.

### BACKGROUND

In wireless communication technology, a communication frequency is, for example, in Frequency Range 2. Due to rapid attenuation of the high-frequency channel, beam-based transmission and/or reception are required to be used to ensure a coverage range.

### SUMMARY

The present disclosure needs to explicitly determine a TCI state used by a Channel State Information Reference Signal (CSI-RS) when multiple indicated TCI states are available.

According to a first aspect of embodiments of the present disclosure, an information processing method is provided. The method is performed by a terminal, and includes: determining a Transmission Configuration Indication (TCI) state of a CSI-RS, wherein the TCI state is a TCI state out of N indicated TCI state(s), where N is a positive integer.

According to a second aspect of embodiments of the present disclosure, an information processing method is provided. The method is performed by a network device, and includes: sending first indication information, wherein the first indication information is used by a terminal to determine N indicated TCI state(s); sending second indication information, wherein the second indication information and the N indicated TCI state(s) are used by the terminal to determine a TCI state of a CSI-RS, where N is a positive integer.

According to a third aspect of embodiments of the present disclosure, a terminal is provided, including: a processing module configured to determine a TCI state of a CSI-RS, wherein the TCI state is a TCI state out of N indicated TCI state(s), where N is a positive integer.

According to a fourth aspect of embodiments of the present disclosure, a network device is provided, including: a second transceiver module configured to send first indication information, wherein the first indication information is used by a terminal to determine N indicated TCI state(s); the second transceiver module is further configured to send second indication information, wherein the second indication information and the N indicated TCI state(s) are used by the terminal to determine a TCI state of a CSI-RS, where N is a positive integer.

According to a fifth aspect of embodiments of the present disclosure, a terminal is provided, including: one or more processors; wherein the terminal is used to execute an optional implementation of the first aspect.

According to a sixth aspect of embodiments of the present disclosure, a network device is provided, including: one or more processors; wherein the network device is used to execute an optional implementation of the second aspect.

According to a seventh aspect of embodiments of the present disclosure, a communication system is provided, including: a terminal and a network device; wherein the terminal is configured to execute the method described in the optional implementation of the first aspect, and the network device is configured to execute the method described in the optional implementation of the second aspect.

According to an eighth aspect of embodiments of the present disclosure, a storage medium is provided that stores instructions, when executed on a communication device, cause the communication device to perform the method described in the first aspect, the second aspect, or an optional implementation of the first and second aspects.

The present disclosure can explicitly determine the TCI state used by the CSI-RS when multiple indicated TCI states are available.

### BRIEF DESCRIPTION OF THE DRAWINGS

In order to more clearly explain the technical solutions in the embodiments of the present disclosure, the drawings required for the description of the embodiments are introduced below. The following drawings are merely some embodiments of the present disclosure and do not impose specific limitations on the protection scope of the present disclosure.
FIG. 1 is a schematic diagram of a structure of an information processing system according to embodiments of the present disclosure.
FIG. 2 is an interactive schematic diagram of an information processing method according to embodiments of the present disclosure.
FIG. 3A is a schematic flowchart of an information processing method according to embodiments of the present disclosure.
FIG. 3B is a schematic flowchart of an information processing method according to embodiments of the present disclosure.
FIG. 4A is a schematic flowchart of an information processing method according to embodiments of the present disclosure.
FIG. 4B is a schematic flowchart of an information processing method according to embodiments of the present disclosure.
FIG. 5A is a schematic diagram of a structure of a network device according to embodiments of the present disclosure.
FIG. 5B is a schematic diagram of a structure of a terminal according to embodiments of the present disclosure.
FIG. 6A is a schematic diagram of a structure of a communication device according to embodiments of the present disclosure.
FIG. 6B is a schematic diagram of a structure of a chip according to embodiments of the present disclosure.

### DETAILED DESCRIPTION

Embodiments of the present disclosure provide an information processing method, a terminal, a network device, a communication system, and a storage medium.

In a first aspect, embodiments of the present disclosure provide an information processing method, performed by a terminal, including: determining a TCI state of a CSI-RS, wherein the TCI state is a TCI state out of N indicated TCI state(s), where N is a positive integer.

In the above embodiments, when there are multiple indicated TCI states, it is possible to determine which indicated TCI state is used by the CSI-RS. In this way, it can explicitly indicate which beam indicated by the indicated TCI state is used for performing the CSI-RS transmission, thereby improving the quality of the wireless communication.

According to some embodiments of the first aspect, the indicated TCI state(s) is/are an indicated joint TCI state, or an indicated downlink (DL) TCI state.

In the above embodiments, if the explicitly indicated TCI state is the indicated joint TCI state, the beam indicated by the indicated joint TCI state can be used to transmit downlink channel information or downlink reference signals, or uplink channel information or uplink reference signals. Alternatively, if the explicitly indicated TCI state is the indicated DL TCI state, the beam indicated by the indicated DL TCI state can be used to transmit downlink channel information or downlink reference signals, etc. In this way, more transmission scenarios can be adapted.

According to some embodiments of the first aspect, the TCI state is a first TCI state out of the N indicated TCI state(s), or the TCI state is a second TCI state out of the N indicated TCI state(s).

In the above embodiments, the TCI state of the CSI-RS can be explicitly determined as the first TCI state or the second TCI state out of the N indicated TCI state(s). In this way, the flexibility of the CSI-RS transmission based on the indicated TCI state can be improved.

According to some embodiments of the first aspect, determining the TCI state of the CSI-RS includes: in a case where a first condition is met, determining the TCI state of the CSI-RS, wherein the first condition being met includes at least one of the following: an interval between CSI-RS transmission and Physical Downlink Control Channel (PDCCH) transmission that schedules the CSI-RS being less than a first threshold; the CSI-RS transmission and Physical Downlink Shared Channel (PDSCH) transmission that uses at least two indicated TCI states occupying the same symbol, and an interval between the PDSCH transmission and the PDCCH transmission that schedules the PDSCH being greater than or equal to a second threshold; the CSI-RS being not configured to follow a unified TCI state; and the CSI-RS being configured with the TCI state corresponding to a Quasi-coloation (QCL) information field.

In the above embodiments, the TCI state used by the CSI-RS under these first conditions is identified, which improves the quality of the wireless communication. For example, if the interval between the CSI-RS transmission and the PDCCH transmission that schedules the CSI-RS is less than the first threshold, the base station may not have enough time to decode the DCI, resulting in insufficient time to obtain the TCI state of the CSI-RS. The TCI state of the CSI-RS can then be clearly determined under the first condition, so that the CSI-RS can be transmitted based on the beam indicated by the clearly determined TCI state, thus improving the quality of the wireless communication.

According to some embodiments of the first aspect, determining the TCI state of the CSI-RS includes: determining the N indicated TCI state(s) based on first indication information; and determining the TCI state of the CSI-RS based on second indication information and the N indicated TCI state(s).

In the above embodiments, the terminal can accurately determine the TCI state of the CSI-RS based on the indication information sent by the network device, this also ensures the beam consistency of the CSI-RS transmission between the terminal and the network device.

According to some embodiments of the first aspect, the first indication information is included in a Medium Access Control (MAC) Control Element (CE) and/or Downlink Control Information (DCI).

In the above embodiments, the first indication information can be included in the MAC CE and/or the DCI, thereby improving the utilization of the MAC CE and/or the DCI and reducing the signaling overhead.

According to some embodiments of the first aspect, the first indication information is included in an MAC CE, wherein the MAC CE is configured to indicate at least one indicated TCI state, and the at least one indicated TCI state corresponds to a codepoint in a TCI state indication field of DCI.

In the above embodiments, a way of indicating the at least one indicated TCI state by including the first indication information in the MAC CE is provided, which can improve the utilization of the MAC and reduce the signaling overhead.

According to some embodiments of the first aspect, the first indication information is included in an MAC CE and DCI, wherein the MAC CE is configured to indicate at least one indicated TCI state corresponding to each codepoint out of multiple codepoints in a TCI state indication field of DCI, and the TCI state indication field of the DCI is configured to indicate a codepoint out of the multiple codepoints.

In the above embodiments, another way of indicating the at least one indicated TCI state by including the first indication information in the MAC CE and DCI is provided, which can adapt to more application scenarios.

According to some embodiments of the first aspect, the second indication information is included in an MAC CE, and the MAC CE is configured to indicate that each indicated TCI state is a first TCI state or a second TCI state of at least two indicated TCI states.

In the above embodiments, the terminal can include the second indication information in the MAC CE to indicate each indicated TCI state shall be which TCI state out of the at least two indicated TCI states (e.g., the first TCI state or the second TCI state). Thus, combined with the first indication information, it is possible to accurately know the TCI state of the CSI-RS is determined as which TCI state out of the at least one indicated TCI state.

According to some embodiments of the first aspect, the N indicated TCI state(s) is/are determined based on at least one first indication information.

In the above embodiments, the terminal can know the N indicated TCI state(s) that is/are indicated at each stage through at least one first indication information sent by the network device.

According to some embodiments of the first aspect, in a case where DCI that includes the first indication information is not received, and an MAC CE that includes the first indication information is received, the MAC CE is configured to indicate at least one indicated TCI state corresponding to each codepoint out of multiple codepoints in a TCI state indication field of the DCI, and the N indicated TCI state(s) is/are at least one indicated TCI state indicated by a predetermined codepoint, an arbitrary codepoint, or a minimum codepoint out of the multiple codepoints.

In the above embodiments, even failing to receive the DCI that includes the first indication information, the terminal can still know the N indicated TCI state(s) based on the MAC CE.

According to some embodiments of the first aspect, the CSI-RS includes at least one of the following: a CSI-RS for channel state information measurement, a CSI-RS for beam measurement, and a CSI-RS for path loss estimation.

In the above embodiments, the TCI states of multiple functional CSI-RSs can be explicitly indicated, facilitating transmission of these CSI-RSs based on determined beams.

In a second aspect, embodiments of the present disclosure provide an information processing method, performed by a network device, including: sending first indication information, wherein the first indication information is used by a terminal to determine N indicated TCI state(s); sending second indication information, wherein the second indication information and the N indicated TCI state(s) are used by the terminal to determine a TCI state of a CSI-RS, where N is a positive integer.

According to some embodiments of the second aspect, the indicated TCI state(s) is/are an indicated joint TCI state, or an indicated downlink (DL) TCI state.

According to some embodiments of the second aspect, the TCI state is a first TCI state out of the N indicated TCI state(s), or the TCI state is a second TCI state out of the N indicated TCI state(s).

According to some embodiments of the second aspect, determining the TCI state of the CSI-RS includes: in a case where a first condition is met, determining the TCI state of the CSI-RS, wherein the first condition being met includes at least one of the following: an interval between CSI-RS transmission and PDCCH transmission that schedules the CSI-RS being less than a first threshold; the CSI-RS transmission and PDSCH transmission that uses at least two indicated TCI states occupying the same symbol, and an interval between the PDSCH transmission and the PDCCH transmission that schedules the PDSCH being greater than or equal to a second threshold; the CSI-RS being not configured to follow a unified TCI state; and the CSI-RS being configured with the TCI state corresponding to a QCL information field.

According to some embodiments of the second aspect, the first indication information is included in an MAC CE and/or DCI.

According to some embodiments of the second aspect, the first indication information is included in an MAC CE, wherein the MAC CE is configured to indicate at least one indicated TCI state, and the at least one indicated TCI state corresponds to a codepoint in a TCI state indication field of DCI.

According to some embodiments of the second aspect, the first indication information is included in an MAC CE and DCI, wherein the MAC CE is configured to indicate at least one indicated TCI state corresponding to each codepoint out of multiple codepoints in a TCI state indication field of the DCI, and the TCI state indication field of the DCI is configured to indicate a codepoint out of the multiple codepoints.

According to some embodiments of the second aspect, the second indication information is included in an MAC CE, and the MAC CE is configured to indicate that each indicated TCI state is a first TCI state or a second TCI state of at least two indicated TCI states.

According to some embodiments of the second aspect, the N indicated TCI state(s) is/are determined based on at least one first indication information.

According to some embodiments of the second aspect, the CSI-RS includes at least one of the following: a CSI-RS for channel state information measurement, a CSI-RS for beam measurement, and a CSI-RS for path loss estimation.

In a third aspect, embodiments of the present disclosure provide a terminal, including: a processing module configured to determine a TCI state of a CSI-RS, wherein the TCI state is a TCI state out of N indicated TCI state(s), where N is a positive integer.

In a fourth aspect, embodiments of the present disclosure provide a network device, including: a second transceiver module configured to send first indication information, wherein the first indication information is used by a terminal to determine N indicated TCI state(s); and the second transceiver module is further configured to send second indication information, wherein the second indication information and the N indicated TCI state(s) are used by the terminal to determine a TCI state of a CSI-RS, where N is a positive integer.

In a fifth aspect, embodiments of the present disclosure provide a terminal, including one or more processors, wherein the terminal is configured to implement optional implementations of the first aspect.

In a sixth aspect, embodiments of the present disclosure provide a network device, including one or more processors, wherein the network device is configured to implement optional implementations of the second aspect.

In a seventh aspect, embodiments of the present disclosure provide a communication system, including a terminal and a network device, wherein the terminal is configured to perform the methods described in the optional implementations of the first aspect, and the network device is configured to perform the methods described in the optional implementations of the second aspect.

In an eighth aspect, embodiments of the present disclosure provide a storage medium having instructions stored thereon, when the instructions are executed on a communication device, the communication device is caused to perform the methods described in the first aspect, the second aspect, or optional implementations of the first and second aspects.

In a ninth aspect, embodiments of the present disclosure provide a program product that, when executed by a communication device, causes the communication device to perform the methods described in the first aspect, the second aspect, or optional implementations of the first and second aspects.

In tenth aspect, embodiments of the present disclosure provide a computer program that, when executed on a computer, causes the computer to perform the information processing methods described in the first aspect, the second aspect, or optional implementations of the first and second aspects.

In an eleventh aspect, embodiments of the present disclosure provide a chip or a chip system, the chip or the chip system includes a processing circuitry configured to perform the methods described in optional implementations of the first, the second, and the third aspects above.

It can be understood that the network device, the terminal, the communication system, the storage medium, the program product, the computer program, the chip, or the chip system described above are all used to perform the methods provided by embodiments of the present disclosure. Therefore, the beneficial effects they can achieve can be referred to the beneficial effects of the corresponding methods, and will not be repeated here.

Embodiments of the present disclosure provide an information processing method, a terminal, a network device, a communication system, and a storage medium. In some embodiments, terms such as information processing method and communication method are interchangeable, terms such as information processing device and communication device are interchangeable, and terms such as information processing system and communication system are interchangeable.

The embodiments of the present disclosure are not exhaustive, but merely illustrative of some embodiments, and are not intended to limit the specific scope of protection of the present disclosure. Where there is no contradiction, each step in a particular embodiment can be implemented as an independent embodiment, and the steps can be arbitrarily combined. For example, a solution after removing some steps in a particular embodiment can also be implemented as an independent embodiment, and the order of the steps in a particular embodiment can be arbitrarily interchanged. Furthermore, the optional implementation methods in a particular embodiment can be arbitrarily combined; moreover, the embodiments can be arbitrarily combined with each other. For example, some or all steps of different embodiments can be arbitrarily combined, and a particular embodiment can be arbitrarily combined with optional implementation methods of other embodiments.

In each embodiment of the present disclosure, unless otherwise specified or logically conflicting, the terminology and/or descriptions between the embodiments are consistent and can be mutually utilized. Technical features in different embodiments can be combined to form new embodiments based on their inherent logical relationships.

The terminology used in these embodiments is for the purpose of describing specific embodiments only and is not intended to limit the present disclosure.

In embodiments of the present disclosure, unless otherwise specified, elements expressed in the singular form, such as "a", "an", "the", "above", "said", "aforementioned", "this", etc., can mean "one and only one", "one or more", or "at least one" etc. For example, when using articles such as "a", "an", and "the" in the translation, the noun following the article can be understood as either a singular expression or a plural expression.

In embodiments of the present disclosure, "multiple" refers to two or more.

In some embodiments, terms such as "at least one of", "at least one item of", "at least one", "one or more", "a plurality of", and "multiple" can be used interchangeably.

In some embodiments, expressions such as "at least one of A and B", "A and/or B", "in the case of A, and in another case of B", and "in response to a case A, and in response to another case B" can, depending on the context, include the following technical solutions: in some embodiments, A (executed regardless of B); in some embodiments, B (executed regardless of A); in some embodiments, execution is performed selectively from A and B (A and B are selectively executed); and in some embodiments, both A and B are executed. The same applies when there are more branches such as A, B, and C.

In some embodiments, the expression "A or B" can, depending on the context, include the following technical solutions: in some embodiments, A (executed regardless of B); in some embodiments, B (executed regardless of A); in some embodiments, execution is performed selectively from A and B (A and B are selectively executed). The same applies when there are more branches such as A, B, and C.

The prefixes such as "first" and "second" in the embodiments of the present disclosure are only for distinguishing different descriptive objects and do not constitute restrictions on the positions, orders, priority, quantity, or contents of the descriptive objects. For the statements of the descriptive objects, please refer to the claims or the description in the context of the embodiments. The use of prefixes should not constitute unnecessary restrictions. For example, if the descriptive object is a "field", then the ordinal numbers before "field" in the "first field" and the "second field" do not restrict the position or the order between the "fields", and the "first" and the "second" do not restrict whether the "fields" they modify are in the same message, nor do they restrict the order of the "first field" and the "second field." For another example, if the descriptive object is a "level", then the ordinal numbers before "level" in the "first level" and the "second level" do not restrict the priority between "levels". In addition, the number of objects described is not limited by the ordinal number, it can be one or more. For example, in the "first device", the number of "devices" can be one or more. In addition, objects modified by different prefixes can be the same or different. For example, if the object is described as "device", then the "first device" and the "second device" can be the same device or different devices, and their types can be the same or different. Similarly, if the object is described as "information", then the "first information" and the "second information" can be the same information or different information, and their contents can be the same or different.

In some embodiments, "including A", "containing A", "for indicating A", and "carrying A" can be interpreted as directly carrying A or indirectly indicating A.

In some embodiments, terms such as "in response to...", "in response to determining...", "in the case of...", "when...", "while", "if...", "as if", etc., can be interchanged.

In some embodiments, terms such as "greater than", "greater than or equal to", "not smaller than", "more than", "more than or equal to", "not less than", "higher than", "higher than or equal to", "not lower than", and "above" are interchangeable. Terms such as "smaller than", "smaller than or equal to", "not greater than", "less than", "less than or equal to", "not more than", "lower than", "lower than or equal to", "not higher than", and "below", etc., are interchangeable.

In some embodiments, "device" can be interpreted as physical or virtual, and its name is not limited to the names described in the embodiments. Terms such as "apparatus", "equipment", "device", "circuit", "network element", "node", "function", "unit", "section", "system", "network", "chip", "chip system", "entity", and "body", etc., are interchangeable.

In some embodiments, the "network" can be interpreted as devices included in the network (e.g., access network device, core network device, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" are interchangeable.

In some embodiments, terms such as "terminal", "terminal device", "user equipment (UE)", "user terminal", and "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" are interchangeable.

In some embodiments, the access network device, the core network device, or the network device can be replaced with the terminal. For example, the communication between the access network device, the core network device, or the network device and the terminal can be replaced with communication between multiple terminals (e.g., also referred to as device-to-device (D2D), vehicle-to-everything (V2X), etc.). In this case, the terminal can also be configured such that a structure of the terminal can perform all or part of the functions of the access network device. In addition, terms such as "uplink" and "downlink" can be replaced with terms corresponding to inter-terminal communication (e.g., "sidelink"). For example, the uplink channel, the downlink channel, etc., can be replaced with the sidelink channel, and the uplink link, the downlink link, etc., can be replaced with the sidelink link.

In some embodiments, the terminal can be replaced with the access network device, the core network device, or the network device. In this case, the access network device, the core network device, or the network device can also be configured such that a structure of the access network device, the core network device, or the network device can perform all or part of the functions of the terminal.

In some embodiments, the obtaining of data, information, etc., can comply with the laws and regulations of the country where the location is situated.

In some embodiments, data, information, etc., can be acquired after obtaining user's consent.

In addition, each element, each row, or each column in the tables of the embodiments of the present disclosure can be implemented as an independent embodiment, and any combination of any element, any row, or any column can also be implemented as an independent embodiment.

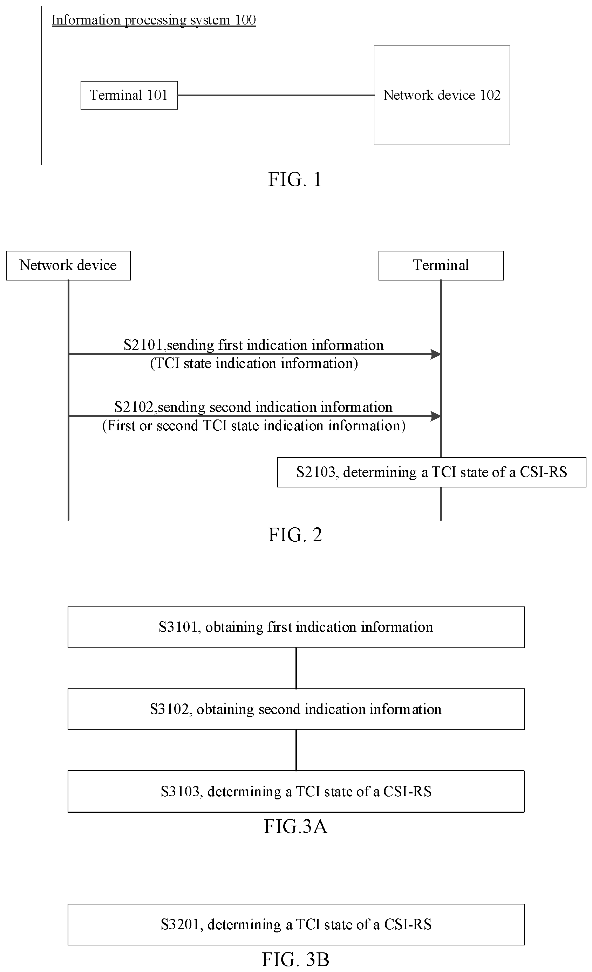

FIG. 1 is a schematic diagram of a structure of an information processing system 100 according to embodiments of the present disclosure. As shown in FIG. 1, the information processing system 100 includes a terminal 101 and a network device 102.

In some embodiments, the network device 102 can include at least one of an access network device and a core network device.

In some embodiments, the terminal 101 includes, for example, at least one of the following: a mobile phone, a wearable device, an IoT device or terminal, a car with communication capabilities, a smart car, a pad, a computer with wireless transceiver capabilities, a VR (virtual reality) terminal device, an AR (augmented reality) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, but it is not limited to these.

In some embodiments, the access network device can be, for example, a node or a device that connects the terminal to a wireless network. The access network device can include at least one of the following: an evolved Node B (eNB) in a 5G communication system, a next generation eNB (ng-eNB), a next generation NodeB (gNB), a node B (NB), a home node B (HNB), a home evolved nodeB (HeNB), a radio backhaul equipment, a radio network controller (RNC), a base station controller (BSC), a base transceiver station (BTS), a base band unit (BBU), a mobile switching center, a base station in a 6G communication system, an Open RAN, a Cloud RAN, a base station in other communication systems, and an access node in the wireless fidelity (Wi-Fi) system, but it is not limited to these.

In some embodiments, the technical solutions of the present disclosure are applicable to Open RAN architectures. In this case, the interfaces between or within access network devices involved in the embodiments of the present disclosure can become internal interfaces of Open RAN. The processes and information interactions between these internal interfaces can be implemented through software or programs.

In some embodiments, the access network device can be composed of a central unit (CU) and a distributed unit (DU). The CU can also be referred to as a control unit. Using a CU-DU structure can separate the protocol layers of the access network device. Some protocol layer functions are centrally controlled by the CU, while the remaining part or all protocol layer functions are distributed in the DU, which is centrally controlled by the CU. However, the present disclosure is not limited to this.

In some embodiments, the core network device can be a single device, including a first network element, a second network element, etc., or the core network equipment can be multiple devices or device groups, including all or part of the first network element and the second network element. The network elements can be virtual or physical. The core network includes, for example, at least one of the Evolved Packet Core (EPC), the 5G Core Network (5GCN), and the Next Generation Core (NGC).

It should be understood that the information processing system described in the embodiments of the present disclosure is for the purpose of more clearly illustrating the technical solutions of the embodiments of the present disclosure, and does not constitute a limitation on the technical solutions provided by the embodiments of the present disclosure. Those of ordinary skill in the art will recognize that, with the evolution of the system architecture and the emergence of new service scenarios, the technical solutions provided by the embodiments of the present disclosure are also applicable to similar technical problems.

The following embodiments of the present disclosure can be applied to the information processing system 100 shown in FIG. 1, or some of its entities, but are not limited to this. The entities shown in FIG. 1 are illustrative, and the information processing system can include all or some of the entities in FIG. 1, as well as other entities not shown in FIG. 1. The number and form of the entities are arbitrary, and the connection relationship between entities is illustrative. The entities can be connected in any way, whether directly or indirectly, wired or wireless.

The embodiments of the present disclosure can be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM^{TM}), CDMA2000, Ultra Mobile Broadband (UMB), IEEE 802.11 (Wi-Fi^{TM}), IEEE 802.16 (WiMAX^{TM}), IEEE 802.20, Ultra-Wide Band (UWB), Bluetooth^{TM}, Public Land Mobile Network (PLMN) network, Device-to-Device (D2D) system, Machine-to-Machine (M2M) system, Internet of Things (IoT) system, Vehicle-to-Everything (V2X) system, systems utilizing information processing methods, and next-generation systems built upon them, etc. In addition, multiple systems can be combined (e.g., a combination of LTE or LTE-A with 5G, etc.) and applied.

In some embodiments, the beams for the Physical Downlink Control Channel (PDCCH), Physical Downlink Shared Channel (PDSCH), Physical Uplink Shared Channel (PUSCH), Physical Uplink Control Channel (PUCCH), and/or reference signals are all independently indicated. In some embodiments, the PDCCH and PUCCH use a Medium Access Control (MAC) Control Element (CE) to activate a beam, and/or, the PDSCH and PUSCH use Downlink Control Information (DCI) signaling to indicate their respective beams. In some embodiments, the reference signals can include at least one of the following: the CSI-RS, the Sounding Reference Signal (SRS), the Positioning Reference Signal (PRS), and the Tracking Reference Signal (TRS). In some embodiments, the CSI-RS includes at least one of the following: the CSI-RS for channel state information measurement, the CSI-RS for beam measurement, and the CSI-RS for path loss estimation. In some embodiments, the SRS includes at least one of the following: the SRS for codebook-based channel state information measurement, the SRS for non-codebook-based channel state information measurement, the SRS for beam measurement, and the SRS for positioning measurement.

In some embodiments, the beam can be indicated through a Transmission Configuration Indication (TCI) state or spatial relation information (spatialrelationinfo). To reduce the signaling overhead, a unified Transmission Configuration Indication (unified TCI) state is introduced. In some embodiments, the unified TCI state can include a downlink Transmission Configuration Indication state (DL TCI state) and an uplink Transmission Configuration Indication state (UL TCI state) separately indicated for uplink and downlink, and/or a joint Transmission Configuration Indication state (joint TCI state) for both uplink and downlink. In some embodiments, if the network device indicates a DL TCI state for downlink, the DL TCI state can be used for the terminal's downlink channels (e.g., PDCCH and/or PDSCH, etc.) and/or downlink reference signals (e.g., CSI-RS, etc.). In some embodiments, if the network device indicates a UL TCI state for uplink, the UL TCI state can be used for the terminal's uplink channels (e.g., PUCCH and/or PUSCH, etc.) and/or uplink reference signals (e.g., SRS, etc.). If the network device indicates a joint TCI state, the joint TCI state can be used simultaneously for uplink channels (e.g., PUCCH and/or PUSCH, etc.), downlink channels (e.g., PDCCH and/or PDSCH, etc.), uplink reference signals (e.g., SRS, etc.), and/or downlink reference signals (e.g., CSI-RS, etc.).

In some embodiments, when a unified TCI state is configured for a Multi Transmission Reception Point (MTRP), whether following the unified TCI state can be configured for the aperiodic (AP) CSI-RS, i.e., whether to use the unified TCI state. If the unified TCI state is used, the RRC needs to be used to configure which TCI state out of two indicated TCI states, namely the joint TCI state or the DL TCI state, of the terminal is used. If the unified TCI state is not used, the TCI state to be used needs to be configured, i.e., a TCI state different from the indicated joint TCI state or the indicated DL TCI state needs to be configured. In some embodiments, the CSI-RS can be a CSI-RS resource, that is, the CSI-RS and the CSI-RS resource can be interchanged. In some embodiments, "multiple" means two or more.

In some embodiments, the indicated TCI state refers to the TCI state to be used indicated by the MAC CE or the DCI, rather than the TCI states in the TCI state list configured by the RRC.

In some embodiments, if the Multi Transmission Reception Point (MTRP) uses the unified TCI state, then multiple TCI states may exist (e.g., multiple indicated TCI states). However, since the CSI-RS is sent by a Single Transmission Reception Point (STRP), it is necessary to specify which TCI state the CSI-RS uses. The PDSCH, PDCCH, PUSCH, and PUCCH can specify which TCI state to use, or they can use multiple TCI states.

FIG. 2 is an interactive schematic diagram of an information processing method according to embodiments of the present disclosure. As shown in FIG. 2, embodiments of the present disclosure relate to an information processing method applied to the information processing system 100. The method includes following steps.

In step S2101, a network device sends first indication information to a terminal.

In some embodiments, the terminal receives the first indication information sent by the first network device.

In some embodiments, the first indication information is included in an MAC CE and/or DCI. In some embodiments, the network device sends the MAC CE to the terminal, and the MAC CE includes the first indication information. In some embodiments, the network device sends the DCI to the terminal, and the DCI includes the first indication information. In some embodiments, the network device sends the MAC CE and the DCI to the terminal, and the MAC CE and the DCI include the first indication information. In some embodiments, the MAC CE and/or DCI are/is configured to indicate the first indication information.

In some embodiments, the first indication information is configured to indicate at least one indicated TCI state. For example, the first indication information is configured to indicate N indicated TCI state(s), where N is a positive integer.

In some embodiments, the first indication information is used by the terminal to determine the N indicated TCI state(s).

In some embodiments, the indicated TCI state(s) can be an indicated unified TCI state. For example, a unified TCI state is the indicated TCI state.

In some embodiments, the indicated TCI state can include an indicated joint TCI state, or an indicated DL TCI state. In some embodiments, the indicated joint TCI state can be used simultaneously for the beam indication of the downlink channel and/or the downlink reference signal, and the uplink channel and/or the uplink reference signal. In some embodiments, the indicated DL TCI state can be used for the beam indication of the downlink channel and/or the downlink reference signal. In some embodiments, the downlink channel can include PDCCH and/or PDSCH, etc., the uplink channel can include PUCCH and/or PUSCH, etc., the downlink reference signal includes the CSI-RS, and the uplink reference signal includes the SRS.

In some embodiments, the indicated TCI state(s) can include an indicated joint TCI state, an indicated DL TCI state, or an indicated UL TCI state. In some embodiments, the indicated UL TCI state can be used for the beam indication of the uplink channel and/or the uplink reference signal.

In some embodiments, the CSI-RS can include at least one of the following: a CSI-RS for channel state information measurement, a CSI-RS for beam measurement, and a CSI-RS for path loss estimation.

In some embodiments, the CSI-RS can include at least one of the following: an aperiodic (AP) CSI-RS, a periodic CSI-RS, and a semi-persistent CSI-RS.

In some embodiments, the CSI-RS can be the AP CSI-RS.

In some embodiments, the CSI-RS can be replaced by a CSI-RS resource.

In some embodiments, the SRS can include at least one of the following: an SRS for codebook-based channel state information measurement, an SRS for non-codebook-based channel state information measurement, an SRS for beam measurement, and an SRS for positioning measurement.

In some embodiments, the SRS can include at least one of the following: an aperiodic SRS, a periodic SRS, and a semi-persistent SRS.

In some embodiments, the SRS can be replaced by an SRS resource.

In some embodiments, the first indication information is included in an MAC CE, the MAC CE is configured to activate or indicate at least one indicated TCI state, and the at least one indicated TCI state corresponds to a codepoint in a TCI state indication field of the DCI.

In some embodiments, the network device sends the MAC CE to the terminal, and the MAC CE includes first indication information. The first indication information is configured to activate at least one indicated TCI state, and the at least one indicated TCI state corresponds to one codepoint in the TCI state indication field of the DCI. In some embodiments, the one codepoint is configured to indicate the at least one indicated TCI state. Here, the at least one indicated TCI state is used by the terminal to determine the N indicated TCI state(s).

In some embodiments, the TCI state indication field can be an arbitrary field, a predetermined field, an arbitrary indication field, or a predetermined indication field of the DCI. In some embodiments, the TCI state indication field can be an existing TCI state indication field (Transmission configuration indication field) in the DCI, or the TCI state indication field can be a newly set TCI state indication field.

In some embodiments, the first indication information is included in the MAC CE and the DCI. The MAC CE is configured to activate or indicate at least one indicated TCI state corresponding to each codepoint out of multiple codepoints in the TCI state indication field of the DCI. The TCI state indication field of the DCI is configured to indicate a codepoint out of the multiple codepoints.

In some embodiments, the network device sends the MAC CE to the terminal, and the MAC CE is configured to activate at least one indicated TCI state corresponding to each codepoint out of the multiple codepoints in the TCI state indication field of the DCI. The network device sends the DCI to the terminal, and the TCI state indication field of the DCI is configured to indicate a codepoint out of the multiple codepoints. In this way, the DCI and the MAC CE can accurately indicate which codepoint indicates the at least one indicated TCI state. Here, the at least one indicated TCI state is used by the terminal to determine the N indicated TCI state(s).

In some embodiments, the first indication information can be one or more bits.

In some embodiments, the name of the first indication information is not limited, and the name can be, for example, TCI state indication information, etc.

In step S2102, the network device sends second indication information to the terminal.

In some embodiments, the terminal receives the second indication information sent by the network device.

In some embodiments, the second indication information is included in the MAC CE. In some embodiments, the second indication information can also be included in other messages or signaling. For example, the second indication information can be included in the DCI. In some embodiments, the MAC CE that includes the second indication information can be the same as the MAC CE or a different MAC CE that includes the first indication information.

In some embodiments, the second indication information is used to determine that each indicated TCI state is a first TCI state or a second TCI state of at least two indicated TCI states.

In some embodiments, the second indication information is used to determine that each indicated joint TCI state is a first joint TCI state or a second joint TCI state of at least two indicated joint TCI states.

In some embodiments, the second indication information is used to determine that each indicated DL TCI state is a first DL TCI state or a second DL TCI state of at least two indicated DL TCI states.

In some embodiments, the second indication information is used to determine that each indicated UL TCI state is a first UL TCI state or a second UL TCI state of at least two indicated UL TCI states.

In some embodiments, the second indication information is used to determine that each indicated TCI state is an L^{th} TCI state of at least two indicated TCI states. In some embodiments, L is a positive integer. In some embodiments, the indicated TCI state is the indicated joint TCI state, the indicated DL TCI state, or the indicated UL TCI state.

In some embodiments, the second indication information is used by the terminal to determine that each indicated TCI state is the L^{th} TCI state of the at least two indicated TCI states.

In some embodiments, the second indication information is used by the terminal to determine the TCI state of the CSI-RS. In some embodiments, the second indication information along with the N indicated TCI state(s) are used by the terminal to determine the TCI state of the CSI-RS. The N indicated TCI state(s) is/are determined by the terminal based on the at least one indicated TCI state indicated by the first indication information.

In some embodiments, the second indication information is included in the MAC CE. The MAC CE is used by the terminal to determine that each indicated TCI state is the first TCI state or the second TCI state of the at least two indicated TCI states. In some embodiments, the MAC CE is configured to indicate that each indicated TCI state is a first TCI state or a second TCI state of at least two indicated TCI states.

In some embodiments, the network device sends the MAC CE to the terminal. The MAC CE is configured to indicate that each indicated TCI state is the first TCI state or the second TCI state of the at least two indicated TCI states. In some embodiments, the second indication information uses one bit to indicate that each indicated TCI state is the first TCI state or the second TCI state of the at least two indicated TCI states. The bit indicating '1' indicates that the corresponding indicated TCI state is the first TCI state of the at least two indicated TCI states, and the bit indicating '0' indicates that the corresponding indicated TCI state is the second TCI state of the at least two indicated TCI states. In some embodiments, the second indication information uses one bit to indicate that an indicated TCI state is the first TCI state or the second TCI state of the at least two indicated TCI states. The bit indicating '1' indicates that the corresponding indicated TCI state is the first TCI state of the at least two indicated TCI states, and the codepoint corresponding to this indicated TCI state that is activated by the MAC CE also corresponds to another indicated TCI state, then the other indicated TCI state is the second TCI state. It should be noted that each indicated TCI state being the first TCI state or the second TCI state of the at least two indicated TCI states here all refers to the indicated TCI states of the same type. For example, each indicated joint TCI state is the first joint TCI state or the second joint TCI state of the at least two indicated joint TCI states, and/or each indicated DL TCI state is the first DL TCI state or the second DL TCI state of the at least two indicated DL TCI states, and/or each indicated UL TCI state is the first UL TCI state or the second UL TCI state of the at least two indicated UL TCI states.

In some embodiments, the second indication information can be one or more bits.

In some embodiments, the name of the second indication information is not limited, which can be, for example, TCI state indication information, first TCI state indication information, or second TCI state indication information, etc.

In some embodiments, the above-mentioned indicated TCI state, the unified TCI state, the indicated joint TCI state, the indicated DL TCI state, and/or the indicated UL TCI state, etc., can all be referred to as TCI states.

In step S2103, the terminal determines a TCI state of a CSI-RS.

In some embodiments, the terminal determines N indicated TCI state(s), and determines the TCI state of the CSI-RS based on the N indicated TCI state(s).

In some embodiments, the terminal determines the N indicated TCI state(s) based on the first indication information, and determines the TCI state of the CSI-RS based on the second indication information and the N indicated TCI state(s). Here, since the first indication information is configured to indicate at least one indicated TCI state, the terminal can determine the N indicated TCI state(s) based on the at least one indicated TCI state indicated by the first indication information. Since the second indication information is configured to indicate that each indicated TCI state is a first TCI state, a second TCI state, or an L^{th} TCI state of at least one indicated TCI state, the terminal can determine the TCI state of the CSI-RS as the first TCI state, the second TCI state, or the L^{th} TCI state of the at least one indicated TCI state based on the second indication information, where L is a positive integer and L is less than or equal to N.

In some embodiments, the TCI state is a TCI state of the N indicated TCI state(s), where N is a positive integer.

In some embodiments, the TCI state is the first TCI state out of the N indicated TCI states, or the TCI state is the second TCI state out of the N indicated TCI states. In some embodiments, the first TCI state can be an indicated joint TCI state or an indicated DL TCI state. In some embodiments, the second TCI state can be an indicated joint TCI state or an indicated DL TCI state.

In some embodiments, the TCI state of the CSI-RS is determined in a case where a first condition is met.

In some embodiments, the first condition being met includes at least one of the following: an interval between CSI-RS transmission and PDCCH transmission that schedules the CSI-RS being less than a first threshold; the CSI-RS transmission and PDSCH transmission that uses at least two indicated TCI states occupying the same symbol, and an interval between the PDSCH transmission and the PDCCH transmission that schedules the PDSCH being greater than or equal to a second threshold; the CSI-RS being not configured to follow a unified TCI state; and the CSI-RS being configured with the TCI state corresponding to a Quasi-coloation (QCL) information field.

In some embodiments, the CSI-RS being not configured to follow a unified TCI state includes: the CSI-RS is not configured, by an upper layer, to follow the unified TCI state; and/or the CSI-RS being configured with the TCI state corresponding to a Quasi-coloation (QCL) information field includes: the CSI-RS is configured, by an upper layer, with the TCI state corresponding to the Quasi-coloation (QCL) information field.

In some embodiments, the upper layer can be the RRC layer, etc.

In some embodiments, the first threshold can be a beam Switching Timing. In some embodiments, the first threshold can be a first time unit, and the first time unit can be a first duration, at least one symbol, or at least one slot.

In some embodiments, the second threshold can be a time duration for QCL. In some embodiments, the second threshold can be a second time unit, and the second time unit can be a second duration, at least one symbol, or at least one slot.

In some embodiments, the QCL information field includes a first QCL information field and a second QCL information field, and the first QCL information field and the second QCL information field correspond to different QCL types.

In some embodiments, if the CSI-RS is not configured, by the upper layer, to follow the unified TCI state, then the CSI-RS needs to be configured, by the upper layer, with a different TCI state than the unified TCI state.

In some embodiments, the CSI-RS is configured, by the upper layer, with the TCI state corresponding to the Quasi-coloation (QCL) information field. Since the CSI-RS is not configured, by the upper layer, to follow the unified TCI state, the CSI-RS needs to be configured, by the upper layer, with a different TCI state than the unified TCI state, that is, the corresponding TCI state is configured in the Quasi-coloation (QCL) information field.

In some embodiments, the CSI-RS transmission and the PDSCH transmission that uses at least two indicated TCI states occupy the same symbol, and the interval between the PDSCH transmission and the PDCCH transmission that schedules the PDSCH is greater than or equal to the second threshold. That is, while receiving the CSI-RS, the terminal needs to receive the PDSCH on the same symbol using two indicated TCI states, so the terminal needs to buffer the CSI-RS using the two indicated TCI states on the same symbol first. After decoding the DCI that schedules the CSI-RS, the terminal knows which CSI-RS the DCI is scheduling, and the terminal also knows that the CSI-RS is configured by the RRC not to follow the unified TCI state. However, the terminal only uses two indicated TCI states to buffer the CSI-RS, so the terminal can only use a first indicated TCI state or a second indicated TCI state of the two indicated TCI states to receive the CSI-RS. In some embodiments, the terminal determines that the CSI-RS is received using the first TCI state of the two indicated TCI states.

In some embodiments, when the MTRP transmission is scheduled using a single DCI (S-DCI), and when the interval between the CSI-RS and the PDCCH that schedules the CSI-RS is less than the first threshold, the TCI state of the CSI-RS is determined.

In some embodiments, the N indicated TCI state(s) is/are determined based on at least one first indication information.

In some embodiments, the N indicated TCI state(s) is/are determined based on the first indication information and the second indication information.

In some embodiments, the TCI state of the CSI-RSI is determined based on the first indication information and the second indication information.

In some embodiments, when the first first indication information is configured to indicate M indicated TCI state(s), the N indicated TCI state(s) is/are the M indicated TCI state(s) indicated by the first first indication information, where M is a positive integer. For example, M=2, meaning that the first first indication information indicates two indicated TCI states, and the two indicated TCI states include a first indicated TCI state and a second indicated TCI state. The second indication information indicates that the first indicated TCI state is the first one of two indicated TCI states, and the second indicated TCI state is the second one of two indicated TCI states. The terminal determines that the N indicated TCI states are the first indicated TCI state and the second indicated TCI state.

In some embodiments, when the second first indication information updates K indicated TCI state(s) out of the M indicated TCI state(s) indicated by the first first indication information, the N indicated TCI state(s) is/are the K indicated TCI state(s) indicated by the second first indication information, or the N indicated TCI state(s) is/are the K indicated TCI state(s) indicated by the second first indication information, and the indicated TCI state(s) other than the K indicated TCI state(s) out of the M indicated TCI state(s) indicated by the first first indication information, where K is a positive integer and K is less than or equal to M. For example, when M=2 and K=2, the second first indication information also indicates two indicated TCI states, which include a third indicated TCI state and a fourth indicated TCI state. The second indication information indicates that the third indicated TCI state is the first one of two indicated TCI states, and the fourth indicated TCI state is the second one of two indicated TCI states. Then, the terminal determines that the N indicated TCI states are the two indicated TCI states indicated by the second first indication information. For example, when M=2 and K=1, the second first indication information only indicates one indicated TCI state, which is a third indicated TCI state. The second indication information indicates that the third indicated TCI state is the first one of two indicated TCI states. Therefore, the terminal determines the N indicated TCI states as the third indicated TCI state indicated by the second first indication information and the second indicated TCI state indicated by the first first indication information.

In some embodiments, the network device sends the first first indication information to the terminal, which indicates two indicated TCI states. Then the N indicated TCI states determined by the terminal are the two indicated TCI states indicated by the first first indication information. For example, the first first indication information indicates two indicated TCI states, which include a first indicated TCI state and a second indicated TCI state. The second indication information indicates that the first indicated TCI state is the first one of two indicated TCI states, and the second indicated TCI state is the second one of two indicated TCI states. The terminal determines the N indicated TCI states as the first indicated TCI state and the second indicated TCI state.

For example, based on the above embodiments, the network device sends the second first indication information to the terminal, which indicates an update to the first indicated TCI state in the first first indication information. The terminal determines the N indicated TCI states as the updated first indicated TCI state indicated by the second first indication information and the second indicated TCI state indicated by the first first indication information, or the terminal determines the N indicated TCI state as the updated first indicated TCI state indicated by the second first indication information. For example, the second first indication information only indicates one indicated TCI state, which is a third indicated TCI state. The second indication information indicates that the third indicated TCI state is the first one of two indicated TCI states. Therefore, the terminal determines the N indicated TCI states as the third indicated TCI state indicated by the second first indication information and the second indicated TCI state indicated by the first first indication information.

In some embodiments, when the DCI including the first indication information is not received, but the MAC CE including the first indication information is received, and the MAC CE is configured to activate at least one indicated TCI state corresponding to each codepoint out of multiple codepoints in the TCI state indication field of the DCI, then the terminal determines the N indicated TCI state(s) as at least one indicated TCI state indicated by a predetermined codepoint, an arbitrary codepoint, or a minimum codepoint out of the multiple codepoints.

In some embodiments, the predetermined codepoint is preset. For example, the predetermined codepoint can be a first codepoint or an arbitrary codepoint, etc. In some embodiments, the predetermined codepoint can be a minimum codepoint out of the multiple codepoints corresponding to at least two joint TCI states, or a minimum codepoint out of the codepoints corresponding to at least two DL TCI states.

In some embodiments, the minimum codepoint is a codepoint with the smallest value out of the codepoints. The value of the codepoint can be represented by bits indicating the codepoint. For example, if there are 5 codepoints, and the bits corresponding to these 5 codepoints are respectively 000, 001, 010, 011, and 100, then the codepoint corresponding to bits "000" is the minimum codepoint.

In some embodiments, the network device sends the DCI and the MAC CE to the terminal, and the first indication information is included in the DCI and the MAC CE. After receiving the MAC CE including the first indication information but before receiving the DCI, since the MAC CE is configured to indicate at least one indicated TCI state corresponding to each codepoint out of the multiple codepoints in the TCI state indication field of the DCI, the terminal determines that the N indicated TCI state(s) can be at least one indicated TCI state corresponding to one codepoint out of the multiple codepoints. In some embodiments, the one codepoint out of the multiple codepoints can be a predetermined codepoint, an arbitrary codepoint, or a minimum codepoint. In some embodiments, the terminal can also determine that the codepoint corresponding to the N indicated TCI state(s) can be the minimum codepoint out of the multiple codepoints corresponding to at least two indicated TCI states. In some embodiments, the at least two indicated TCI states include at least two indicated joint TCI states or at least two indicated DL TCI states.

In some embodiments, the names of the information, etc. are not limited to those described in the embodiments. Terms such as "information", "message", "signal", "signaling", "report", "configuration", "indication", "instruction", "command", "channel", "parameter", "domain", "field", "symbol", "conde element", "codebook", "codeword", "codepoint", "bit", "data", "program", "chip", etc. can be used interchangeably.

In some embodiments, terms such as "acquire", "get", "obtain", "receive", "transmit", "bidirectional transmit", "send and/or receive", etc. can be used interchangeably and can be interpreted as receiving from other entities, acquiring from protocols, acquiring from upper layers, obtaining through self-processing, or autonomous implementation.

In some embodiments, terms such as "send", "emit", "report", "distribute", "transmit", "bidirectional transmit", "send and/or receive", etc. can be used interchangeably.

In some embodiments, terms such as "certain", "predetermined", "preset", "set", "indicated", "one", "arbitrary", "first", etc. may be interchangeable with each other. Terms such as "specific A", "predetermined A", "preset A", "set A", "indicated A", "a certain A", "arbitrary A", "first A" can be interpreted as A predetermined in the protocol or obtained through setting, configuration, or indication, or interpreted as a specific A, a certain A, an arbitrary A, or a first A, etc., but is not limited to this.

In some embodiments, the determination or judgment can be performed using a value represented by one bit (0 or 1), or by a true/false value (Boolean value), or by a numerical comparison (e.g., a comparison with a predetermined value), but is not limited to this.

The information processing method involved in the embodiments of the present disclosure can include at least one of steps S2101 to S2103. For example, step S2101 can be implemented as an independent embodiment, step S2102 may be implemented as an independent embodiment, step S2103 can be implemented as an independent embodiment, a combination of steps S2101 and S2102 can be implemented as an independent embodiment, a combination of steps S2102 and S2103 can be implemented as an independent embodiment, a combination of steps S2101 and S2103 can be implemented as an independent embodiment, and a combination of steps S2101, S2102, and S2103 can be implemented independently as an independent embodiment.

In some embodiments, steps S2101 and S2102 can be optional, and one or more of these steps can be omitted or substituted in different embodiments.

In some embodiments, step S2103 can be optional, and one or more of these steps can be omitted or substituted in different embodiments.

FIG. 3A is a schematic flowchart of an information processing method according to embodiments of the present disclosure. As shown in FIG. 3A, embodiments of the present disclosure relate to an information processing method, and the method is performed by a terminal. The method includes following steps.

In step S3101, obtaining first indication information.

Optional implementations of step S3101 can be found in the optional implementations of step S2101 in FIG. 2 and other related parts in the embodiments involved in FIG. 2, which will not be repeated here.

In some embodiments, the terminal receives first indication information sent by a network device, but is not limited to this. The terminal can also receive the first indication information sent by other entities.

In some embodiments, the terminal obtains the first indication information specified by a protocol.

In some embodiments, the terminal obtains the first indication information from an upper layer(s).

In some embodiments, the terminal obtains the first indication information through processing.

In some embodiments, step S3101 is omitted, and the terminal autonomously implements the function indicated by the first indication information, or the above function is default or set by default.

In step S3102, obtaining second indication information.

Optional implementations of step S3102 can be found in the optional implementations of step S2102 in FIG. 2 and other related parts in the embodiments involved in FIG. 2, which will not be repeated here.

In some embodiments, the terminal receives second indication information sent by the network device, but is not limited to this. The terminal can also receive the second indication information sent by other entities.

In some embodiments, the terminal obtains the second indication information specified by the protocol.

In some embodiments, the terminal obtains the second indication information from an upper layer(s).

In some embodiments, the terminal obtains the second indication information through processing.

In some embodiments, step S3102 is omitted, and the terminal autonomously implements the function indicated by the second indication information, or the above function is default or set by default.

In step S3103, determining a TCI state of a CSI-RS.

Optional implementations of step S3103 can be found in the optional implementations of step S2103 in FIG. 2 and other related parts in the embodiments involved in FIG. 2, which will not be repeated here.

In some embodiments, the terminal determines N indicated TCI state(s) and determines the TCI state of the CSI-RS based on the N indicated TCI state(s). In some embodiments, the terminal determines that a first indicated TCI state out of the N indicated TCI state(s) is the TCI state of the CSI-RS, or the terminal determines that a second indicated TCI state out of the N indicated TCI state(s) is the TCI state of the CSI-RS.

The information processing method involved in the embodiments of the present disclosure can include at least one of steps S3101 to S3103. For example, step S3101 can be implemented as an independent embodiment, step S3102 can be implemented as an independent embodiment, step S3103 can be implemented as an independent embodiment, a combination of steps S3101 and S3102 can be implemented as an independent embodiment, a combination of steps S3102 and S3103 can be implemented as an independent embodiment, a combination of steps S3101 and S3103 can be implemented as an independent embodiment, a combination of steps S3101, S3102, and S3103 can be implemented independently as an independent embodiment.

In some embodiments, steps S3101 and S3102 can be optional, and one or more of these steps can be omitted or substituted in different embodiments.

In some embodiments, step S3103 can be optional, and one or more of these steps can be omitted or substituted in different embodiments.

FIG. 3B is a schematic flowchart of an information processing method according to embodiments of the present disclosure. As shown in FIG. 3B, embodiments of the present disclosure relate to an information processing method, and the method is performed by a terminal. The method includes following steps.

In step S3201, determining a TCI state of a CSI-RS.

Optional implementations of step S3201 can be found in optional implementations of step S2103 in FIG. 2, or step S3103 in FIG. 3A, and other related parts in the embodiments involved in FIGS. 2 and 3A, which will not be repeated here.

In some embodiments, the TCI state is a TCI state out of N indicated TCI state(s), where N is a positive integer.

In some embodiments, the indicated TCI state(s) is/are an indicated joint TCI state, or an indicated DL TCI state.

In some embodiments, the TCI state is a first TCI state out of N indicated TCI state(s), or the TCI state is s second TCI state out of N indicated TCI state(s).

In some embodiments, determining the TCI state of the CSI-RS includes: in a case where a first condition is met, determining the TCI state of the CSI-RS, wherein the first condition being met includes at least one of the following: an interval between CSI-RS transmission and PDCCH transmission that schedules the CSI-RS being less than a first threshold; the CSI-RS transmission and PDSCH transmission that uses at least two indicated TCI states occupying the same symbol, and an interval between the PDSCH transmission and the PDCCH transmission that schedules the PDSCH being greater than or equal to a second threshold; the CSI-RS being not configured to follow a uniform TCI state; and the CSI-RS being configured with the TCI state corresponding to a QCL information field.

In some embodiments, determining the TCI state of the CSI-RS includes: determining N indicated TCI state(s) based on first indication information; and determining the TCI state of the CSI-RS based on second indication information and the indicated TCI state(s).

In some embodiments, the first indication information is included in the MAC CE and/or the DCI.

In some embodiments, the first indication information is included in the MAC CE, the MAC CE is configured to indicate at least one indicated TCI state, and the at least one indicated TCI state corresponds to a codepoint in the TCI state indication field of the DCI. In some embodiments, the MAC CE is configured to activate at least one indicated TCI state.

In some embodiments, the first indication information is included in the MAC CE and the DCI. The MAC CE is configured to indicate at least one indicated TCI state corresponding to each codepoint out of multiple codepoints in the TCI state indication field of the DCI. The TCI state indication field of the DCI is configured to indicate a codepoint out of the multiple codepoints. In some embodiments, the MAC CE is configured to activate at least one indicated TCI state corresponding to each codepoint out of the multiple codepoints in the TCI state indication field of the DCI.

In some embodiments, the second indication information is included in the MAC CE, and the MAC CE is configured to indicate that each indicated TCI state is a first TCI state or a second TCI state of at least two indicated TCI states.

In some embodiments, the N indicated TCI state(s) is/are determined based on at least one first indication information.

In some embodiments, when the DCI that includes the first indication information is not received, and the MAC CE that includes the first indication information is received, the MAC CE is configured to indicate at least one indicated TCI state corresponding to each codepoint out of multiple codepoints in the TCI state indication field of the DCI, and the N indicated TCI state(s) is/are at least one indicated TCI state indicated by a predetermined codepoint, an arbitrary codepoint, or a minimum codepoint out of the multiple codepoints.

In some embodiments, the CSI-RS includes at least one of the following: a CSI-RS for channel state information measurement, a CSI-RS for beam measurement, and a CSI-RS for path loss estimation.

The above embodiments can be implemented individually or in combination with each other. Optional implementations are shown in the optional implementations of steps shown in FIGS. 2 and 3A, and will not be repeated here.

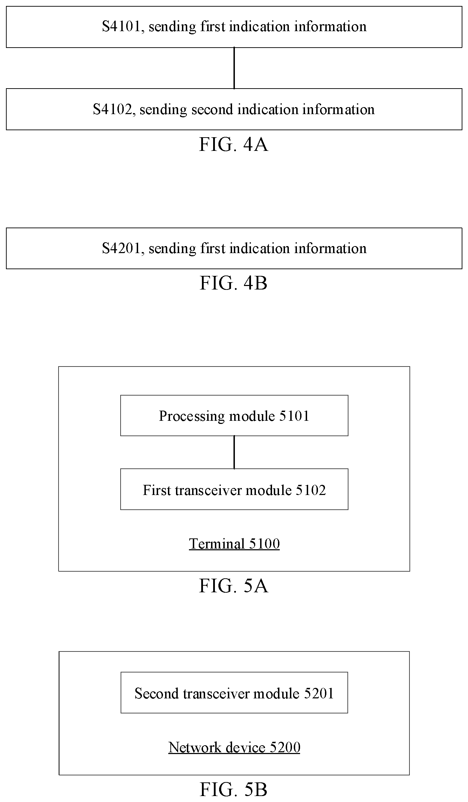

FIG. 4A is a schematic flowchart of an information processing method according to embodiments of the present disclosure. As shown in FIG. 4A, embodiments of the present disclosure relate to an information processing method, and the method is performed by a network device. The method includes following steps.

In step S4101, sending first indication information.

Optional implementations of step S4101 can be found in the optional implementations of step S2101 in FIG. 2 and other related parts in the embodiments involved in FIG. 2, which will not be repeated here.

In some embodiments, the network device sends the first indication information to a terminal, but is not limited to this. The network device can also send the first indication information to other entities.

In some embodiments, the first indication information is used by the terminal to determine N indicated TCI state(s).

In step S4102, sending second indication information.

Optional implementations of step S4102 can be found in the optional implementations of step S2102 in FIG. 2 and other related parts in the embodiments involved in FIG. 2, which will not be repeated here.

In some embodiments, the network device sends the second indication information to the terminal, but is not limited to this. The network device can also send the second indication information to other entities.

In some embodiments, the second indication information is used by the terminal to determine the TCI state of the CSI-RS. In some embodiments, the second indication information and the N indicated TCI state(s) are used by the terminal to determine that the TCI state of the CSI-RS is a TCI state out of the N indicated TCI state(s). In some embodiments, the second indication information and the N indicated TCI state(s) are used by the terminal to determine that the TCI state of the CSI-RS is a first TCI state or a second TCI state out of the N indicated TCI state(s).

The information processing method involved in the embodiments of the present disclosure can include at least one of steps S4101 to S4102. For example, step S4101 can be implemented as an independent embodiment, step S4102 can be implemented as an independent embodiment, and a combination of steps S4101 and S4102 can be implemented as an independent embodiment.

In some embodiments, step S4101 can be optional, and one or more of these steps can be omitted or substituted in different embodiments.

In some embodiments, step S4102 can be optional, and one or more of these steps can be omitted or substituted in different embodiments.

FIG. 4B is a schematic flowchart of an information processing method according to embodiments of the present disclosure. As shown in FIG. 4B, embodiments of the present disclosure relate to an information processing method, and the method is performed by a network device. The method includes following steps.

In step S4201, sending first indication information.

Optional implementations of step S4201 can be found in optional implementations of step S2101 of FIG. 2, or step S4101 of FIG. 4A, and other related parts in the embodiments involved in FIGS. 2 and 4A, which will not be repeated here.

In some embodiments, the first indication information is used by the terminal to determine N indicated TCI state(s).

In some embodiments, the method further includes sending second indication information. The second indication information and the N indicated TCI state(s) are used by the terminal to determine the TCI state of the CSI-RS, where N is a positive integer.

In some embodiments, the indicated TCI state(s) is/are an indicated joint TCI state, or an indicated downlink (DL) TCI state.

In some embodiments, the TCI state is a first TCI state out of the N indicated TCI state(s), or the TCI state is a second TCI state out of the N indicated TCI state(s).

In some embodiments, determining the TCI state of the CSI-RS includes: in a case where a first condition is met, determining the TCI state of the CSI-RS, wherein the first condition being met includes at least one of the following: an interval between CSI-RS transmission and PDCCH transmission that schedules the CSI-RS being less than a first threshold; the CSI-RS transmission and PDSCH transmission that uses at least two indicated TCI states occupying the same symbol, and an interval between the PDSCH transmission and the PDCCH transmission that schedules the PDSCH being greater than or equal to a second threshold; the CSI-RS being not configured to follow a uniform TCI state; and the CSI-RS being configured with the TCI state corresponding to a QCL information field.

In some embodiments, the first indication information is included in the MAC CE and/or the DCI.

In some embodiments, the first indication information is included in the MAC CE, the MAC CE is configured to indicate at least one indicated TCI state, and the at least one indicated TCI state corresponds to a codepoint in the TCI state indication field of the DCI.

In some embodiments, the first indication information is included in the MAC CE and the DCI. The MAC CE is configured to indicate at least one indicated TCI state corresponding to each codepoint out of multiple codepoints in the TCI state indication field of the DCI. The TCI state indication field of the DCI is configured to indicate a codepoint out of the multiple codepoints.

In some embodiments, the second indication information is included in the MAC CE, and the MAC CE is configured to indicate that each indicated TCI state is a first TCI state or a second TCI state of at least two indicated TCI states.

In some embodiments, the N indicated TCI state(s) is/are determined based on at least one first indication information.

In some embodiments, the CSI-RS includes at least one of the following: a CSI-RS for channel state information measurement, a CSI-RS for beam measurement, and a CSI-RS for path loss estimation.

The above embodiments can be implemented individually or in combination with each other. Optional implementations are shown in the optional implementations of steps shown in FIGS. 2 and 4A, and will not be repeated here.

Embodiments of the present disclosure relate to an information processing method, and the method includes following steps.

In some embodiments, the terminal determines the TCI state of the aperiodic CSI-RS resource as a first indicated joint/DL TCI state. In some embodiments, the CSI-RS resource can be replaced by the CSI-RS. The CSI-RS can be the AP CSI-RS, the indicated joint/DL TCI state can be either an indicated joint TCI state or an indicated DL TCI state, and the indicated joint/DL TCI state can be the indicated TCI state in previous embodiments.

In some embodiments, the AP CSI-RS meets at least one of the following conditions:
an interval between the AP CSI-RS and the PDCCH being less than a threshold (e.g., beamSwitchTiming);
the AP CSI-RS overlapping with the PDSCH that uses two indicated joint/DL TCI states (e.g., occupying the same symbol), and an interval between the PDSCH and the PDCCH that schedules the PDSCH being greater than or equal to a threshold (e.g., timeDurationForQCL);
the AP CSI-RS being not configured to follow a unified TCI state, or the AP CSI-RS being configured by an upper layer (e.g., RRC signaling) with the TCI states corresponding to the first OCL information (e.g., qcl-info) field and the second QCL information (e.g., qcl-info2) field.

In some embodiments, the terminal determines that the first indicated joint/DL TCI state is the first one of two indicated joint/DL TCI states determined by the terminal.

In some embodiments, the two indicated joint/DL TCI states can be indicated through the MAC CE and/or the DCI. In some embodiments, the MAC CE indicates one or two indicated joint/DL TCI states corresponding to at least one codepoint in the DCI indication field, and the DCI indicates a codepoint out of multiple codepoints. Furthermore, the MAC CE also indicates that each indicated joint/DL TCI state corresponds to the first one or the second one of two indicated joint/DL TCI states. In some embodiments, the DCI indication field can be the TCI state indication field in previous embodiments.

In some embodiments, the terminal determines N indicated joint/DL TCI states, where N is a positive integer, and N is greater than or equal to 1.

In some embodiments, determining the N indicated joint/DL TCI states can include: receiving first indication information (included in the MAC CE and/or the DCI), the first indication information indicating N TCI states; and determining the N TCI states based on multiple-time first indication information.

In some embodiments, if the first-time first indication information indicates two TCI states, then before the second-time first indication information arrives, the N TCI states are the two TCI states indicated by the first-time first indication information. If the second-time first indication information indicates one TCI state, for example, an update to the first TCI state in the first-time first indication information, then before the third-time first indication information arrives, the N TCI states can include only the first TCI state in the second-time first indication information, or the N TCI states can include both the first TCI state in the second-time first indication information and the second TCI state in the first-time first indication information. The TCI state can be the indicated joint/DL TCI state. In some embodiments, the first-time first indication information can be the first first indication information in the previous embodiment, the second-time first indication information can be the second first indication information in the previous embodiment, and the third-time first indication information can be the third third indication information.

In some embodiments, when the first indication information is included in the DCI, and if the terminal has not yet received the first indication information but has already received the MAC CE including the first indication information, and the MAC CE is configured to activate the N TCI states respectively corresponding to the multiple codepoints in the TCI state indication field of the DCI, then the N TCI states can be determined based on the N TCI state corresponding to the minimum codepoint out of the multiple codepoints corresponding to the multiple TCI states.

In some embodiments, the aperiodic CSI-RS resource can be a CSI-RS resource for CSI measurement or beam measurement, or the aperiodic CSI-RS resource can be a CSI-RS resource for path loss estimation.

In some embodiments, all operations performed by the terminal in determining the TCI state of the CSI-RS in the previous embodiments can be performed by the network device or agreed upon by the protocol. For example, the network device determines the TCI state of the CSI-RS.

In embodiments of the present disclosure, some or all steps, and their optional implementations, can be arbitrarily combined with some or all steps in other embodiments, and can also be arbitrarily combined with optional implementations in other embodiments.

Embodiments of the present disclosure also provide an apparatus for implementing any of the above methods. For example, an apparatus is provided, which includes units or modules for implementing the steps performed by the terminal in any of the above methods. In addition, an apparatus is provided, including units or modules for implementing the steps performed by the network device (e.g., access network device, core network functional node, core network device, etc.) in any of the above methods.

It should be understood that the division of the units in the above apparatus is only a logical functional division. In actual implementations, they can be fully or partially integrated into a single physical entity, or they can be physically separated. In addition, the units in the apparatus can be implemented by a processor calling software. For example, the apparatus includes a processor connected to a memory containing computer instructions. The processor calls the computer instructions stored in the memory to implement any of the above methods or to implement the functions of the units in the above apparatus. The processor can be, for example, a general-purpose processor, such as a central processing unit (CPU) or a microprocessor, and the memory can be internal or external to the apparatus. Alternatively, the units in the apparatus can be implemented as hardware circuits. The functions of some or all units can be achieved through the design of these hardware circuits, which can be understood as one or more processors. For example, in one implementation, the hardware circuit is an application-specific integrated circuit (ASIC). The functions of some or all of the units are achieved through the design of the logical relationships between the components within the circuit. In another implementation, the hardware circuit can be implemented using a programmable logic device (PLD). Taking a Field Programmable Gate Array (FPGA) as an example, it can include a large number of logic gates. The connection relationships between the logic gates are configured through a configuration file, thereby achieving the functions of some or all of the units. All units of the above apparatus can be implemented entirely through processor-called software, entirely through hardware circuits, or partially through processor-called software with the remaining parts implemented through hardware circuits.

In the present disclosure, the processor is a circuit with signal processing capabilities. In one implementation, the processor can be a circuit with instruction read and execute capabilities, such as a central processing unit (CPU), microprocessor, graphics processing unit (GPU) (which can be understood as a type of microprocessor), or digital signal processor (DSP). In another implementation, the processor can implement certain functions through the logical relationships of hardware circuits. These logical relationships are fixed or reconfigurable. For example, the processor is a hardware circuit implemented using an application-specific integrated circuit (ASIC) or a programmable logic device (PLD), such as an FPGA. In a reconfigurable hardware circuit, the process of the processor loading a configuration document and configuring the hardware circuit can be understood as the processor loading instructions to implement the functions of some or all of the above units. In addition, it can also be a hardware circuit designed for artificial intelligence, which can be understood as an ASIC, such as a neural network processing unit (NPU), tensor processing unit (TPU), or deep learning processing unit (DPU), etc.

FIG. 5A is a schematic diagram of a structure of a terminal 5100 according to embodiments of the present disclosure. As shown in FIG. 5A, the terminal 5100 includes a processing module 5101 and a first transceiver module 5102. In some embodiments, the processing module 5101 is configured to determine a TCI state of a CSI-RS. In some embodiments, the processing module 5101 is configured to perform at least one of the processing steps (such as step S2103, etc., but is not limited to this) performed by the terminal 5100 in any of the above methods, which will not be described in detail here. In some embodiments, the first transceiver module 5102 is configured to perform at least one of the receiving and/or sending steps (such as step S2101 and/or step S2102, but is not limited to this) performed by the terminal 5100 in any of the above methods, which will not be described in detail here.

FIG. 5B is a schematic diagram of a structure of a network device 5200 according to embodiments of the present disclosure. As shown in FIG. 5B, the network device 5200 includes a second transceiver module 5201. In some embodiments, the second transceiver module 5201 is configured to send first indication information and/or send second indication information. In some embodiments, the second transceiver module 5201 is configured to perform at least one of the receiving and/or sending steps (e.g., steps S2102 and/or S2102, but is not limited to this) performed by the network device in any of the above methods, which will not be described in detail here.

In some embodiments, the transceiver module can include a sending module and/or a receiving module, which can be separate or integrated. In some embodiments, the transceiver module can be interchangeable with a transceiver. In some embodiments, the first transceiver module includes a first sending module and/or a first receiving module. In some embodiments, the second transceiver module includes a second sending module and/or a second receiving module.

In some embodiments, the processing module can be a single module or can include multiple sub-modules. In some embodiments, the multiple sub-modules can each perform all or part of the steps required by the processing module. In some embodiments, the processing module can be interchangeable with a processor.

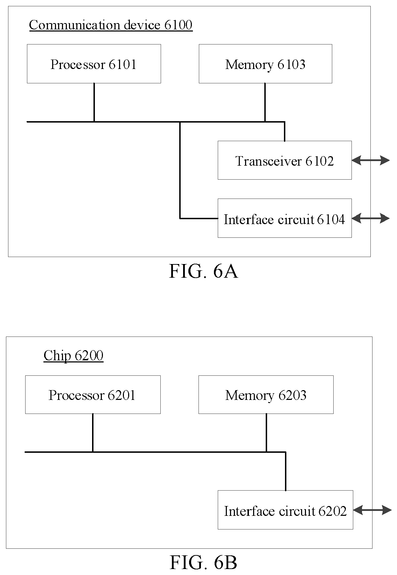

FIG. 6A is a schematic diagram of a structure of a communication device 6100 according to embodiments of the present disclosure. The communication device 6100 can be a network device (e.g., access network device, core network device, first network element, second network element, etc.), a terminal (e.g., user equipment, etc.), or a chip, a chip system, or a processor that supports the network device in implementing any of the above methods, or a chip, a chip system, or a processor that supports the terminal in implementing any of the above methods. The communication device 6100 can be used to implement the methods described in the above method embodiments, and reference can be made to the descriptions in the above method embodiments for detail.

As shown in FIG. 6A, the communication device 6100 includes one or more processors 6101. The processor 6101 can be a general-purpose processor or an application-specific processor, such as a baseband processor or a central processing unit (CPU). The baseband processor can be used to process communication protocols and communication data, and the CPU can be used to control communication devices (e.g., base stations, baseband chips, terminal devices, terminal device chips, DUs or CUs, etc.), execute programs, and process program data. In some embodiments, the communication device 6100 can be configured to perform any of the above methods. In some embodiments, the one or more processors 6101 can be configured to invoke instructions to cause the communication device 6100 to perform any of the above methods.

In some embodiments, the communication device 6100 further includes one or more transceivers 6102. When the communication device 6100 includes one or more transceivers 6102, the transceivers 6102 perform at least one of the communication steps (e.g., step S2101, but is not limited to this) in the above methods, such as sending and/or receiving, while the processor 6101 performs at least one of other steps (e.g., step S2102 and/or step S2103, but is not limited to this). In some embodiments, the transceivers can include receivers and/or transmitters, which can be separate or integrated. In some embodiments, terms such as transceiver, transceiver unit, transceiver machine, transceiver circuit, interface circuit, interface, etc., can be used interchangeably, terms such as transmitter, sending unit, transmitter machine, sending circuit, etc., can be used interchangeably; and terms such as receiver, receiving unit, receiver machine, receiving circuit, etc., can be used interchangeably.

In some embodiments, the communication device 6100 further includes one or more memories 6103 for storing data. In some embodiments, all or part of the memories 6103 can also be located outside the communication device 6100. In some embodiment, the communication device 6100 can include one or more interface circuits 6104. In some embodiments, the interface circuit 6104 is connected to the memory 6103, and the interface circuit 6104 can be used to receive data from the memory 6103 or other devices, and can be used to send data to the memory 6103 or other devices. For example, the interface circuit 6104 can read data stored in the memory 6103 and send the data to the processor 6101.

The communication device 6100 described in the above embodiments can be a network device or a terminal, but the scope of the communication device 6100 described in the present disclosure is not limited to this, and the structure of the communication device 6100 is not limited to FIG. 6A. The communication device can be a standalone device or part of a larger device. For example, the communication device can be: (1) a standalone integrated circuit (IC), a chip, a chip system, or a subsystem; (2) a collection of one or more ICs, optionally, including storage components for storing data and programs; (3) an ASIC, such as a modem; (4) a module that can be embedded in other devices; (5) a receiver, a terminal device, a smart terminal device, a cellular phone, a wireless device, a handheld device, a mobile unit, a vehicle-mounted device, a network device, a cloud device, an artificial intelligence device, etc., and (6) other devices, etc.

FIG. 6B is a schematic diagram of a structure of a chip 6200 according to embodiments of the present disclosure. For the case where the communication device 6100 can be a chip or a chip system, reference is made to the schematic diagram of the structure of the chip 6200 shown in FIG. 6B, but it is not limited to this.

The chip 6200 includes one or more processors 6201. The chip 6200 is used to perform any of the above methods.

In some embodiments, the chip 6200 further includes one or more interface circuits 6202. In some embodiments, terms such as interface circuit, interface, and transceiver pin can be used interchangeably. In some embodiments, the chip 6200 further includes one or more memories 6203 for storing data. In some embodiments, all or part of the memories 6203 can be located outside the chip 6200. In some embodiments, the interface circuit 6202 is connected to the memory 6203, the interface circuit 6202 can be used to receive data from the memory 6203 or other devices, and the interface circuit 6202 can be used to send data to the memory 6203 or other devices. For example, the interface circuit 6202 can read data stored in the memory 6203 and send the data to the processor 6201.

In some embodiments, the interface circuit 6202 performs at least one of the communication steps such as sending and/or receiving in the above methods (e.g., steps S2101 and/or step S2102, but is not limited to this). The interface circuit 6202 performing the communication steps such as sending and/or receiving in the above methods refers, for example, to the interface circuit 6202 performing data interaction between the processor 6201, the chip 6200, the memory 6203, or the transceiver device. In some embodiments, the processor 6201 performs at least one of other steps (e.g., step S2103, but is not limited to this).

The modules and/or devices described in the various embodiments, such as virtual devices, physical devices, and chips, can be arbitrarily combined or separated as appropriate. In some embodiments, some or all of the steps can also be performed collaboratively by multiple modules and/or devices, without limitation herein.

The present disclosure also provides a storage medium storing instructions. When the instructions are executed on the communication device 6100, the communication device 6100 is caused to perform any of the above methods. In some embodiments, the storage medium is an electronic storage medium. In some embodiments, the storage medium is a computer-readable storage medium, but is not limited to this. The storage medium can also be a storage medium readable by other devices. In some embodiments, the above storage medium can be a non-transitory storage medium, but is not limited to this. The above storage medium can also be a temporary storage medium.

The present disclosure also provides a program product that, when executed by the communication device 6100, causes the communication device 6100 to perform any of the above methods. In some embodiments, the above program product is a computer program product.

The present disclosure also provides a computer program that, when run on a computer, causes the computer to perform any of the above methods.

## Claims

1. An information processing method, performed by a terminal, the method comprising:
determining a Transmission Configuration Indication, TCI, state of a Channel State Information Reference Signal, CSI-RS, wherein the TCI state is a TCI state out of N indicated TCI state(s), where N is a positive integer.

2. The method according to claim 1, wherein the indicated TCI state(s) is/are an indicated joint TCI state, or an indicated downlink, DL, TCI state.

3. The method according to claim 1 or 2, wherein
the TCI state is a first TCI state out of the N indicated TCI state(s);
or
the TCI state is a second TCI state out of the N indicated TCI state(s).

4. The method according to any of claims 1 to 3, wherein determining the Transmission Configuration Indication, TCI, state of the Channel State Information Reference Signal, CSI-RS, comprises:
in a case where a first condition is met, determining the TCI state of the CSI-RS, wherein the first condition being met comprises at least one of:
an interval between CSI-RS transmission and Physical Downlink Control Channel, PDCCH, transmission that schedules the CSI-RS being less than a first threshold;
the CSI-RS transmission and Physical Downlink Shared Channel, PDSCH, transmission that uses at least two indicated TCI states occupying the same symbol, and an interval between the PDSCH transmission and the PDCCH transmission that schedules the PDSCH being greater than or equal to a second threshold;
the CSI-RS being not configured to follow a unified TCI state; and
the CSI-RS being configured with the TCI state corresponding to a Quasi-coloation, QCL, information field.

5. The method according to any of claims 1 to 4, wherein determining the Transmission Configuration Indication, TCI, state of the Channel State Information Reference Signal, CSI-RS, comprises:
determining the N indicated TCI state(s) based on first indication information; and
determining the TCI state of the CSI-RS based on second indication information and the N indicated TCI state(s).

6. The method according to claim 5, wherein the first indication information is comprised in a Medium Access Control Control Element, MAC CE, and/or Downlink Control Information, DCI.

7. The method according to claim 6, wherein the first indication information is comprised in the MAC CE, and wherein the MAC CE is configured to indicate at least one indicated TCI state, and the at least one indicated TCI state corresponds to a codepoint in a TCI state indication field of the DCI.

8. The method according to claim 6, wherein the first indication information is comprised in the MAC CE and the DCI, and wherein the MAC CE is configured to indicate at least one indicated TCI state corresponding to each codepoint out of multiple codepoints in a TCI state indication field of the DCI, and the TCI state indication field of the DCI is configured to indicate a codepoint out of the multiple codepoints.

9. The method according to any of claims 6 to 8, wherein the second indication information is comprised in the MAC CE, and the MAC CE is configured to indicate that each indicated TCI state is a first TCI state or a second TCI state of at least two indicated TCI states.

10. The method according to any of claims 6 to 8, wherein the N indicated TCI state(s) is/are determined based on at least one first indication information.

11. The method according to claim 10, wherein in a case where the DCI that comprises the first indication information is not received, and the MAC CE that comprises the first indication information is received, the MAC CE is configured to indicate at least one indicated TCI state corresponding to each codepoint out of multiple codepoints in a TCI state indication field of the DCI, and the N indicated TCI state(s) is/are the at least one indicated TCI state indicated by a predetermined codepoint, an arbitrary codepoint, or a minimum codepoint out of the multiple codepoints.

12. The method according to any of claims 1 to 11, wherein the CSI-RS comprises at least one of:
the CSI-RS for channel state information measurement;
the CSI-RS for beam measurement; and
the CSI-RS for path loss estimation.

13. An information processing method, performed by a network device, the method comprising at least one of:
sending first indication information, wherein the first indication information is used by a terminal to determine N indicated Transmission Configuration Indication, TCI, state(s); and
sending second indication information, wherein the second indication information and the N indicated TCI state(s) are used by the terminal to determine a TCI state of a Channel State Information Reference Signal, CSI-RS, where N is a positive integer.

14. The method according to claim 13, wherein the indicated TCI state(s) is/are an indicated joint TCI state, or an indicated downlink, DL, TCI state.

15. The method according to claim 13 or 14, wherein
the TCI state is a first TCI state out of the N indicated TCI state(s);
or
the TCI state is a second TCI state out of the N indicated TCI state(s).

16. The method according to any of claims 13 to 15, wherein determining the TCI state of the Channel State Information Reference Signal, CSI-RS, comprises:
in a case where a first condition is met, determining the TCI state of the CSI-RS, wherein the first condition being met comprises at least one of:
an interval between CSI-RS transmission and Physical Downlink Control Channel, PDCCH, transmission that schedules the CSI-RS being less than a first threshold;
the CSI-RS transmission and Physical Downlink Shared Channel, PDSCH, transmission that uses at least two indicated TCI states occupying the same symbol, and an interval between the PDSCH transmission and the PDCCH transmission that schedules the PDSCH being greater than or equal to a second threshold;
the CSI-RS being not configured to follow a unified TCI state; and
the CSI-RS being configured with the TCI state corresponding to a Quasi-coloation, QCL, information field.

17. The method according to any of claims 13 to 16, wherein the first indication information is comprised in a Medium Access Control Control Element, MAC CE, and/or Downlink Control Information, DCI.

18. The method according to claim 17, wherein the first indication information is comprised in the MAC CE, and wherein the MAC CE is configured to indicate at least one indicated TCI state, and the at least one indicated TCI state corresponds to a codepoint in a TCI state indication field of the DCI.

19. The method according to claim 17, wherein the first indication information is comprised in the MAC CE and the DCI, and wherein the MAC CE is configured to indicate at least one indicated TCI state corresponding to each codepoint out of multiple codepoints in a TCI state indication field of the DCI, and the TCI state indication field of the DCI is configured to indicate a codepoint out of the multiple codepoints.

20. The method according to any of claims 13 to 19, wherein the second indication information is comprised in the MAC CE, and the MAC CE is configured to indicate that each indicated TCI state is a first TCI state or a second TCI state of at least two indicated TCI states.

21. The method according to any of claims 13 to 19, wherein the N indicated TCI state(s) is/are determined based on at least one first indication information.

22. The method according to any of claims 13 to 21, wherein the CSI-RS comprises at least one of:
the CSI-RS for channel state information measurement;
the CSI-RS for beam measurement; and
the CSI-RS for path loss estimation.

23. A terminal, comprising:
a processing module configured to determine a Transmission Configuration Indication, TCI, state of a Channel State Information Reference Signal, CSI-RS, wherein the TCI state is a TCI state out of N indicated TCI state(s), where N is a positive integer.

24. A network device, comprising:
a second transceiver module configured to send first indication information, wherein the first indication information is used by a terminal to determine N indicated Transmission Configuration Indication, TCI, state(s);
wherein the second transceiver module is further configured to send second indication information, wherein the second indication information and the N indicated TCI state(s) are used by the terminal to determine a TCI state of a Channel State Information Reference Signal, CSI-RS, where N is a positive integer.

25. A terminal, comprising:
one or more processors;
wherein the terminal is configured to perform the information processing method according to any of claims 1 to 12.

26. A network device, comprising:
one or more processors;
wherein the network device is configured to perform the information processing method according to any of claims 13 to 22.

27. A communication system, comprising a terminal and a network device, wherein the terminal is configured to perform the information processing method according to any of claims 1 to 12, and the network device is configured to perform the information processing method according to any of claims 13 to 22.

28. A storage medium having instructions stored thereon, wherein when the instructions are executed on a communication device, the communication device is caused to perform the information processing method according to any of claims 1 to 12 or any of claims 13 to 22.
